# EUROPÄISCHE PATENTSCHRIFT

(11) **EP 1 134 472 B1**
(45) Veröffentlichungstag und Bekanntmachung des Hinweises auf die Patenterteilung: **22.11.2006**
(21) Anmeldenummer: 00890222.3
(22) Anmeldetag: 18.07.2000
(51) Int. Cl.: F16L 5/04, H02G 3/22

(54) **Dichtungselement für eine Vorrichtung zur brandgesicherten Durchführung von Leitungen u.dgl. durch in Wänden befindliche Öffnungen hindurch**
Sealing element for a fire barrier device for the passage of conduits through openings in walls
Elément d'étanchéite pour un dispositif coupe-feu pour le passage de conduites à travers des ouvertures dans les murs

(30) Priorität: 14.03.2000 AT 4162000
(43) Veröffentlichungstag der Anmeldung: 19.09.2001
(73) Patentinhaber: bst Brandschutztechnik Döpfl Gesellschaft mbH, 1140 Wien (AT)
(72) Erfinder: Döpfl, Wolfgang, 1140 Wien (AT)
(74) Vertreter: Atzwanger, Richard

(56) Entgegenhaltungen:
- FR-A- 1 140 634
- GB-A- 2 186 443
- GB-A- 2 204 922

## Beschreibung

Die gegenständliche Erfindung betrifft Vorrichtung zur brandgesichterten Durchführung von Leitungen, Kabeln, Rohren u.dgl. durch in Wänden befindliche Öffnungen hindurch mit einem rahmenförmigen Gehäuse für eine Mehrzahl von quaderförmigen Packstücken, welche aus zwei Dichtungselementen mit in diese eingesetzten, mit Kanälen versehenen, halbzylinderförmigen Einsätzen bestehen, wodurch die Durchmesser der Durchgangskanäle an unterschiedliche Durchmesser von Leitungen, Kabeln, Rohren u.dgl. anpassbar sind, wobei die Einsätze an ihren Innenseiten mit zumindest angenähert halbringförmigen Rippen sowie an ihrer Außenseite mit halbringförmigen Rippen und mit zwischen den Rippen befindlichen halbringförmigen Nuten und die Dichtungselemente an ihrer Innenseite mit den an der Außenseite der Einsätze vorgesehenen halbringförmigen Nuten und Rippen gegengleichen, ebenfalls zumindest angenähert halbringförmigen Rippen und Nuten ausgebildet sind.

Aus der DE 196 02 76 A1 sind Vorrichtungen zur brandgesicherten Durchführung von Leitungen u.dgl. bekannt, innerhalb welcher mehrere mit Durchgangskanälen ausgebildete Packstücke angeordnet sind. Dabei besteht das Erfordernis, daß die in die Durchgangskanäle eingesetzten Leitungen gegenüber dem Durchtritt von Rauchgasen abgedichtet sind. Um dieser Forderung zu entsprechen, ist es aus dieser Literaturstelle bekannt, Dichtungselemente mit im Durchmesser unterschiedlich großen Durchgangskanälen vorzusehen. Dies bedingt jedoch, eine sehr große Anzahl von unterschiedlich ausgebildeten Packstücken zur Verfügung zu haben, aus welchen jeweils dasjenige ausgesucht werden muß, dessen Durchgangskanal den erforderlichen Durchmesser aufweist.

Aus der WO 97/36 356 sind weiters Packstücke bekannt, welche aus zwei einander zugeordneten Dichtungselementen bestehen, welche jeweils mit einer halbzylindrischen Ausnehmung ausgebildet sind, wobei jedes Dichtungselement mit vier Laschen ausgebildet ist, welche Laschen entweder entfernt werden können oder welche in die halbzylindrische Ausnehmung eingelegt werden können, wodurch die Packstücke an eine Vielzahl von im Durchmesser unterschiedlichen Leitungen angepasst werden können.
Obgleich durch einige wenige unterschiedlich große derartige Packstücke dem Erfordernis auf Anpassung an im Durchmesser sehr unterschiedliche Leitungen entsprochen werden kann, sind diese Packstücke deshalb nachteilig, da sie einen sehr großen Materialverlust verursachen.

Aus der EU 429 916 B1 ist weiters ein Packstück bekannt, welches gleichfalls aus zwei einander zugeordneten, mit halbzylindrischen Ausnehmungen ausgebildeten Dichtungselementen besteht, wobei sich in den Ausnehmungen eine Vielzahl von entfernbaren Einlagen befindet. Um eine Anpassung der Größe des Durchgangskanals an den Querschnitt der Leitungen zu bewirken, können aus dem Durchgangskanal unterschiedlich viele Einlagen entfernt werden.
Dieses bekannte Packstück ist gleichfalls deshalb nachteilig, da es einen sehr großen Materialverlust bedingt. Zudem ist es deshalb sehr arbeitsaufwendig, da in Abhängigkeit vom Durchmesser der jeweiligen Leitung od.dgl. eine Mehrzahl bis eine Vielzahl von Einlagen entfernt werden muss.

Aus der GB 2 204 922 A ist weiters ein Packstück bekannt, welches aus zwei Dichtungselementen mit in diese eingesetzten, im Querschnitt zylinderförmigen Einsätzen besteht. Dabei sind die Dichtungselemente an ihren Innenseiten mit zumindest angenähert halbringförmigen Rippen und mit zwischen den Rippen befindlichen halbringförmigen Nuten ausgebildet, in welchen die Einsätze einsetzbar sind. Die Einsätze bestehen aus zylindrischen Bauteilen, welche eine Vielzahl von radial übereinander liegenden Ringen aufweisen, wobei zur Anpassung an den Durchmesser der betreffenden Leitungen, Kabel, Rohre u.dgl. ein Teil der Ringe entfernt wird. Auch dieser Einrichtung haftet der Mangel an, dass sie einen großen Materialverlust bedingt und dass deren Verwendung sehr arbeitsaufwendig ist.

Aus der US-A 4839471 ist weiters eine Dichtungsvorrichtung bekannt, welche aus einem Gehäuse besteht, in welches Dichtungselemente eingesetzt sind, welche mit in radialer Richtung verformbaren Rippen ausgebildet sind, durch welche eine Anpassung an die in diese Dichtungselemente eingesetzten Kabel u.dgl. bewirkt wird.
Bei dieser bekannten Vorrichtung sind jedoch keine Packstücke vorgesehen, innerhalb welcher sich die Dichtungselemente befinden und welche zur Lagehaltung der Dichtungselemente dienen.

Der gegenständlichen Erfindung liegt die Aufgabe zugrunde, ein Packstück zu schaffen, welches bei unterschiedlichen Durchmessern von Leitungen, Kabeln, Rohren u.dgl. verwendbar und voll wirksam ist und durch welches die dem Stand der Technik anhaftenden Nachteile vermieden werden. Dies wird erfindungsgemäß dadurch erzielt, dass die Rippen der Dichtungselemente in die Nuten der Einsätze nur über einen Teil von deren Höhe einragen, so dass die an der Innenwand der Einsätze befindlichen Rippen in diese Nuten eindringen können.

Vorzugsweise sind zwischen den von der Innenseite der Einsätze abragenden Rippen halbringförmige Nuten vorgesehen. Weiters weist vorzugsweise die Breite der Nuten der Dichtungselemente angenähert die doppele Breite der Rippen der Dichtungselemente auf. Nach einer weiteren bevorzugten Ausführungsform sind in einem Teil der Nuten der Dichtungselemente Vertiefungen vorgesehen und ist ein Teil der von der Außenseite der Einsätze abragenden Rippen mit den in den Nuten der Dichtungselemente vorgesehenen Vertiefungen zugeordneten, zusätzlichen Vorsprüngen ausgebildet.

Der Gegenstand der Erfindung ist nachstehend anhand von in der Zeichnung dargestellten Ausführungsbeispielen näher erläutert. Es zeigen:
- Fig. 1: ein Packstück mit zwei erfindungsgemäßen Dichtungselementen, in Stirnansicht,
- Fig. 2: das Packstück gemäß Fig. 1, in Seitenansicht,
- Fig. 3: ein erfindungsgemäßes Dichtungselement, in Draufsicht,
- Fig. 4: ein erfindungsgemäßes Dichtungselement, im Längsschnitt nach der Linie IV-IV der Fig. 3,
- Fig. 5: ein erfindungsgemäßes Dichtungselement, im Schnitt nach der Linie V-V der Fig. 4,
- Fig. 6: ein erfindungsgemäßes Dichtungselement, im Schnitt nach der Linie VI-VI der Fig. 4,
- Fig. 7: einen Einsatz, in Draufsicht,
- Fig. 8: den Einsatz gemäß Fig. 7, in Seitenansicht und teilweise aufgebrochen,
- Fig. 9: den Einsatz gemäß Fig. 7, in Stirnansicht und
- die Fig. 10 und 10a, 11 und 11 a sowie 12 und 12a: drei unterschiedlich große erfindungsgemäße Dichtungselemente, jeweils mit in diese eingesetzten Leitungen mit unterschiedlichen Durchmessern und jeweils in axialem Längsschnitt.

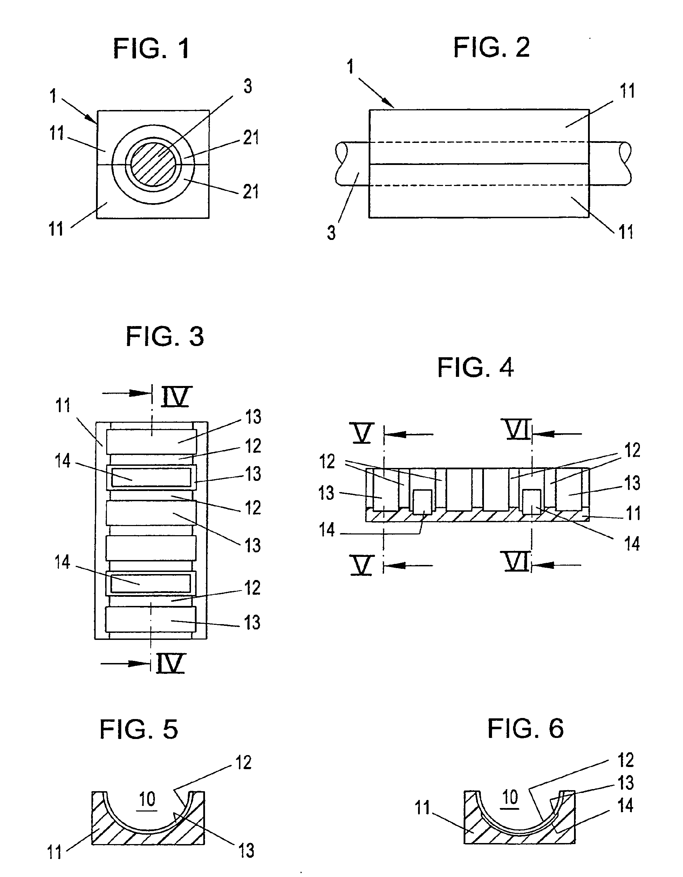

Das in den Fig. 1 und 2 dargestellte quaderförmige Packstück 1 besteht aus zwei symmetrisch ausgebildeten Dichtungelementen 11, welche mit jeweils einer angenähert halbzylindrischen Ausnehmung ausgebildet sind und welche zur Aufnahme von zwei halbzylindrischen Einsätzen 21, welche gleichfalls mit halbzylindrischen Ausnehmungen ausgebildet sind, dienen. In den hierdurch gebildeten Durchgangskanal ist eine Leitung 3 eingesetzt. Dabei müssen die Dichtungselemente 11 und die in diesen befindlichen Einsätze 21 so ausgebildet sein, daß sie die Leitung 3 dicht umschließen, um hierdurch die angestrebte Sicherheit gegenüber dem Hindurchtritt von Brandgasen zu gewährleisten. Dabei soll jedoch für unterschiedliche Durchmesser der Leitungen eine geringe Anzahl von unterschiedlich großen Dichtungselementen 11 mit Einsätzen 21 ermöglicht werden.

Wie dies aus den Fig. 3 bis 6 ersichtlich ist, sind die einzelnen Dichtungselemente 11 mit einer angenähert halbzylindrischen Ausnehmung 10 ausgebildet, wobei die diese Ausnehmung 10 begrenzende Wandung mit halbringförmigen Rippen 12 und zwischen diesen mit halbringförmigen Nuten 13 ausgebildet ist. Zudem sind einige der Nuten 13 mit Vertiefungen 14 ausgebildet.

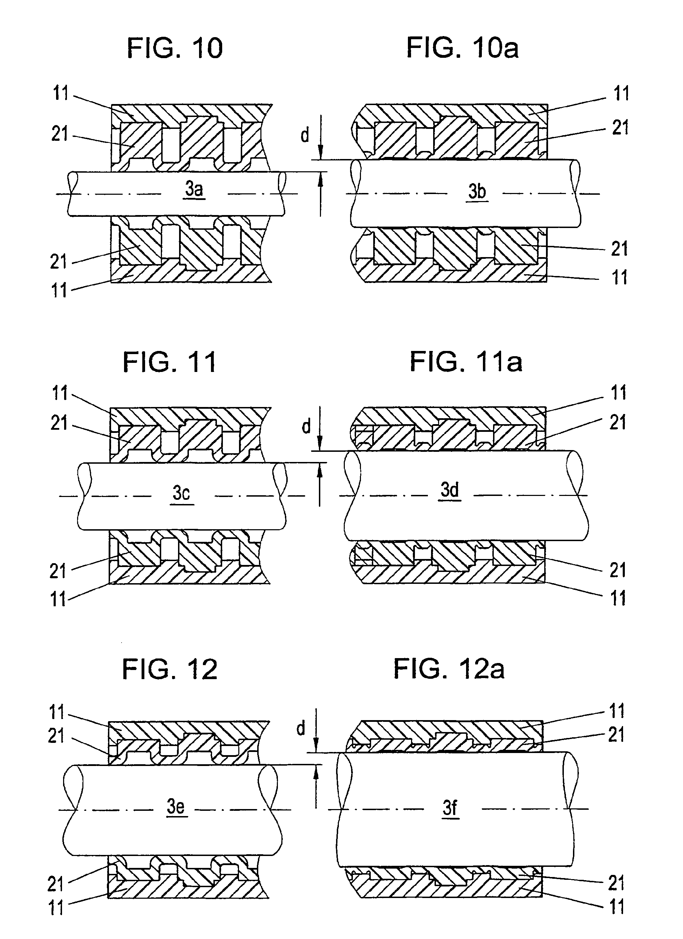

Wie dies aus den Fig. 7 bis 9 ersichtlich ist, sind die Einsätze 21, welche angenähert als halbe Hohlzylinder mit einer halbzylindrischen Ausnehmung 20 ausgebildet sind, an ihrer Außenwand gleichfalls mit Rippen 23 und mit zwischen diesen befindlichen Nuten 22 ausgebildet, wobei zudem einige der Rippen 23 mit zusätzlichen Vorsprüngen 24 ausgebildet sind. Dabei sind die Nuten 22 der Einsätze 21 gegengleich zu den Rippen 12 der Dichtungselemente 11 und sind die Rippen 23 sowie die Vorsprünge 24 gegengleich zu den Nuten 13 und zu den Ausnehmungen 14 der Dichtungselemente 11 ausgebildet, wobei sich jedoch diese Gegengleichheit nur auf die Lage dieser Rippen und Nuten und nicht auf deren Höhe bezieht, da die Tiefe der Nuten 22 größer ist als die Höhe der Rippen 12.

Zudem ist auch die Innenwand der Einsätze 21 mit halbringförmigen Rippen 25 und mit zwischen diesen befindlichen halbringförmigen Nuten 26 ausgebildet.

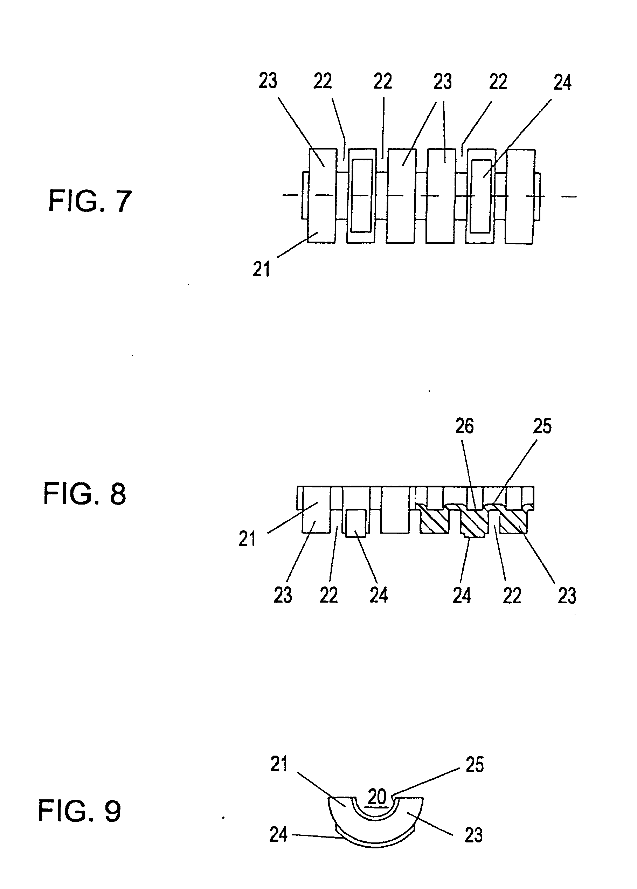

Durch die an den einander zugewandten Flächen gegengleichen Profilierungen der Dichtungselemente 11 und der Einsätze 21 wird die erforderliche Lagestabilität der Einsätze 21 in den Dichtungselementen 11 bewirkt. Dadurch weiters, daß die Rippen 12 der Dichtungselemente 11 in die Nuten 22 der Einsätze 21 nur über einen Teil von deren Höhe einragen, können die an der Innenwand der Einsätze 21 befindlichen Rippen 25 in die Nuten 22 eindringen, wodurch eine Anpassung der lichten Weiten der durch die Einsätze 21 gebildeten Kanäle an unterschiedliche Durchmesser von in diese eingesetzten Leitungen, Kabel, Rohre u.dgl. bewirkt wird. Hierdurch können die Einsätze 21 auf eine sehr geringe Anzahl von unterschiedlichen Größen beschränkt werden, ohne daß hierdurch ihre Funktionsfähigkeit verschlechtert wird.
Es wird diesbezüglich auf die Fig. 10 bis 13 verwiesen, in welchen Dichtungselemente 11 mit drei unterschiedlich großen Einsätzen 21 dargestellt sind, welche jeweils für sechs Leitungen geeignet sind, wobei sich die Leitungen 3a und 3b, 3c und 3d sowie 3e und 3f im Durchmesser jeweils um den Wert 2d unterscheiden.

## Patentansprüche

1. Vorrichtung zur brandgesichterten Durchführung von Leitungen (3a), Kabeln, Rohren u.dgl. durch in Wänden befindliche Öffnungen hindurch mit einem rahmenförmigen Gehäuse und einer Mehrzahl von quaderförmigen Packstücken, welche aus zwei Dichtungselementen (11) mit in diese eingesetzten, mit Kanälen versehenen, im Querschnitt halbring förmigen Einsätzen (21) bestehen, wodurch die Durchmesser der Durchgangskanäle an unterschiedliche Durchmesser von Leitungen (3a), Kabeln, Rohren u.dgl. anpassbar sind, wobei die Einsätze (21) an ihren Innenseiten mit zumindest angenähert halbringförmigen Rippen (25) sowie an ihrer Außenseite mit halbringförmigen Rippen (23) und mit zwischen den Rippen (23) befindlichen halbringförmigen Nuten (22) und die Dichtungselemente (11) an ihrer Innenseite mit den an der Außenseite der Einsätze (21) vorgesehenen halbringförmigen Nuten (22) und Rippen (23) gegengleichen, ebenfalls zumindest angenähert halbringförmigen Rippen (12) und Nuten (13) ausgebildet sind, **dadurch gekennzeichnet, dass** die Rippen (12) der Dichtungselemente (11) in die Nuten (22) der Einsätze (21) nur über einen Teil von deren Höhe einragen, so dass die an der Innenwand der Einsätze (21) befindlichen Rippen (25) in diese Nuten (22) eindringen können.

2. Vorrichtung nach Patentanspruch 1, **dadurch gekennzeichnet, dass** zwischen den von der Innenseite der Einsätze (21) abragenden Rippen (25) halbringförmige Nuten (26) vorgesehen sind.

3. Vorrichtung nach einem der Patentansprüche 1 und 2, **dadurch gekennzeichnet, dass** die Breite der Nuten (13) der Dichtungselemente (11) angenähert die doppelte Breite der Rippen (12) der Dichtungselemente (11) aufweist.

4. Vorrichtung nach einem der Patentansprüche 1 bis 3, **dadurch gekennzeichnet, dass** in einem Teil der Nuten (13) der Dichtungselemente (11) Vertiefungen (14) vorgesehen sind und dass ein Teil der von der Außenseite der Einsätze (21) abragenden Rippen (23) mit den in den Nuten (13) der Dichtungselemente (11) vorgesehenen Vertiefungen (14) zugeordneten, zusätzlichen Vorsprüngen (24) ausgebildet ist.

## Claims

1. A device for fire-proofed lead-through of lines (3a), cables, pipes and the like through openings located in walls, having a frame-like housing and a plurality of cuboid packing pieces, which consist of two sealing elements (11) with cross-sectionally semi-annular inserts (21) inserted therein and provided with channels, whereby the diameter of the passage channels may be adapted to different diameters of lines (3a), cables, pipes and the like, the inserts (21) being constructed on their inside with at least approximately semi-annular ribs (25) and on their outside with semi-annular ribs (23) and with semi-annular grooves (22) located between the ribs (23) and the sealing elements (11) being constructed on their inside with likewise at least approximately semi-annular ribs (12) and grooves (13) as counterparts to the semi-annular grooves (22) and ribs (23) provided on the outside of the inserts (21), **characterised in that** the ribs (12) of the sealing elements (11) project into the grooves (22) of the inserts (21) only over part of the height thereof, such that the ribs (25) located on the internal wall of the inserts (21) may penetrate into these grooves (22).

2. A device according to claim 1, **characterised in that** semi-annular grooves (26) are provided between the ribs (25) projecting from the inside of the inserts (21) .

3. A device according to either one of claims 1 and 2, **characterised in that** the width of the grooves (13) of the sealing elements (11) is approximately twice the width of the ribs (12) of the sealing elements (11).

4. A device according to any one of claims 1 to 3, **characterised in that** recesses (14) are provided in some of the grooves (13) of the sealing elements (11) and **in that** some of the ribs (23) projecting from the outside of the inserts (21) are constructed with additional projections (24) associated with the recesses (14) provided in the grooves (13) of the sealing elements (11).

## Revendications

1. Dispositif pour faire passer, en assurant une protection coupe-feu, des conduites (3a), des câbles, des tuyaux, etc. dans des ouvertures prévues dans des murs, avec un boîtier en forme de cadre et plusieurs joints parallélipipédiques qui se composent de deux éléments d'étanchéité (11) contenant des garnitures (21) à section semi-annulaire pourvues de conduits, moyennant quoi les diamètres des conduits de passage peuvent être adaptés à différents diamètres de conduites (3a), de câbles, de tuyaux, etc., étant précisé que les garnitures (21) présentent sur leur côté intérieur des nervures au moins approximativement semi-annulaires (25) et sur leur côté extérieur des nervures semi-annulaires (23) et des rainures semi-annulaires (22) situées entre celles-ci tandis que les éléments d'étanchéité (11) présentent sur leur côté intérieur des nervures (12) et des rainures (13) au moins approximativement semi-annulaires, elles aussi, et correspondant aux rainures (22) et aux nervures (23) semi-annulaires prévues sur le côté extérieur des garnitures (21),
**caractérisé en ce que** les nervures (12) des éléments d'étanchéité (11) ne pénètrent que sur une partie de leur hauteur dans les rainures (22) des garnitures (21), de telle sorte que les nervures (25) situées sur la paroi intérieure des garnitures (21) peuvent pénétrer dans ces rainures (22).

2. Dispositif selon la revendication 1, **caractérisé en ce qu'**il est prévu, entre les nervures (25) qui dépassent du côté intérieur des garnitures (21), des rainures semi-annulaires (26).

3. Dispositif selon l'une des revendications 1 et 2, **caractérisé en ce que** la largeur des rainures (13) est approximativement égale au double de la largeur des nervures (12) des éléments d'étanchéité (11).

4. Dispositif selon l'une des revendications 1 à 3, **caractérisé en ce que** des creux (14) sont prévus dans une partie des rainures (13) des éléments d'étanchéité (11) et **en ce qu'**une partie des nervures (23) qui dépassent du côté extérieur des garnitures (21) sont pourvues de saillies supplémentaires (24) qui sont associées aux creux (14) prévus dans les rainures (13) des éléments d'étanchéité (11).
